Europäisches Patentamt

(19) **European Patent Office**

Office européen des brevets

(11) Publication number: **0 221 658**
**B1**

(12) **EUROPEAN PATENT SPECIFICATION**

(45) Date of publication of the patent specification:
**25.10.89**

(51) Int. Cl.⁴: **F16L 19/03**, F16L 15/00, F16L 17/02

(21) Application number: **86307214.6**

(22) Date of filing: **19.09.86**

(54) Tube coupling.

(30) Priority: **23.10.85  US 790397**

(43) Date of publication of application:
**13.05.87 Bulletin 87/20**

(45) Publication of the grant of the patent:
**25.10.89 Bulletin 89/43**

(84) Designated Contracting States:
**DE GB**

(56) References cited:
**DE-A- 2 554 827**
**DE-A- 2 816 447**

(73) Proprietor: **GENERAL MOTORS CORPORATION,**
**General Motors Building 3044 West Grand Boulevard,**
**Detroit Michigan 48202(US)**

(72) Inventor: **Straub, Robert D., 9830 Auburndale, Livonia**
**Michigan 48150(US)**

(74) Representative: **Denton, Michael John et al, Patent**
**Section - Luton Office (F6) Vauxhall Motors Limited P.O.**
**Box 3 Kimpton Road, Luton Bedfordshire LU2 0SY(GB)**

ACTORUM AG

## Description

This invention relates to tube couplings and, in particular, though not exclusively, to a tube coupling for thin walled tubes used, for example, as fuel lines in a diesel engine on a truck.

Tube couplings with flared tube fittings are well known in the art. Also well known in the art are beaded tube couplings with an O-ring seal. There are two types of known beaded tube coupling. There is a rigid mount type, as shown for example in US patent nos. 3,092,404 and 3,393,930 and DE-A 2 554 827, in which a bead on the tube is clamped between metal or rigid surfaces defined by the parts of the tube coupling. There is also a soft mount type, as shown for example in US patent no. 2,560,263 and DE-A 2 554 827 in which a bead on the tube is not clamped between rigid surfaces, but engages one or more O-ring seals when the tube coupling is formed.

It is known, however, that when such tubes and their couplings are used as a fuel line to supply fuel, for example, to a unit fuel injector in a diesel engine, such a fuel line tube will be subjected to the vibration of the engine. This excitation causes the fuel line tube to vibrate relative to its connecting points to the associate couplings. The amplitude of the fuel line tube's vibration determines the maximum bending stress of the fuel line tube which occurs at the connecting point of the couplings. In flared tube fittings, each of its connecting points is at the connecting nut to flared tube interface. In beaded tube type couplings, each of its connecting points is at the connecting nut to bead on tube interface.

These known tube couplings are therefore susceptible to vibration failure. In a beaded tube coupling of the soft mount type it is intended to provide a tube coupling with vibration isolation for the tube by lowering the natural frequency of the tube. In practice, however, it has been found that this arrangement has the disadvantage of not being durable.

It is an object of the present invention to provide a tube coupling which is durable and which provides resistance to vibration failure.

To this end, a tube coupling in accordance with the present invention is characterised over DE-A 2 554 827 by the features specified in the characterising portion of Claim I.

The present invention relates to tube couplings of the beaded tube type wherein a rigid ferrule is rigidly and sealingly fixed to an associate end of the tube, each rigid ferrule including a radial flange portion which is outwardly extending and which defines, in effect, an annular bead encircling the tube and a shank portion extending axially outboard of the radial flange portion for a predetermined axial extent so that the point where maximum bending stress on each end of the tube is moved to the outboard end of the associate rigid ferrule.

This invention therefore provides an improved tube coupling of the beaded tube type with O-ring seal wherein a rigid ferrule fixed to the tube has a radial flange portion thereof defining a bead encircling the tube and has an axial extending shank portion which is used to reinforce the tube.

This invention also provides an improved tube coupling wherein a sealing ring encircling the tube defines a primary seal and wherein a rigid ferrule, fixed to the tube adjacent to the sealing ring associated with a coupling body member and, a tubular coupling nut forms a metal to metal seal, with the rigid ferrule having a shank portion of an axial extent comparable to the axial extent of the tubular coupling nut whereby to increase the natural frequency of vibration of the tube.

This invention is further described, by way of example, with reference to the following detailed description to be read in connection with the accompanying drawings; in which:-

Figure I is a view in elevation and partly in section of a fuel line tube coupling arrangement with tube couplings, in accordance with the invention, at opposite ends thereof; and,

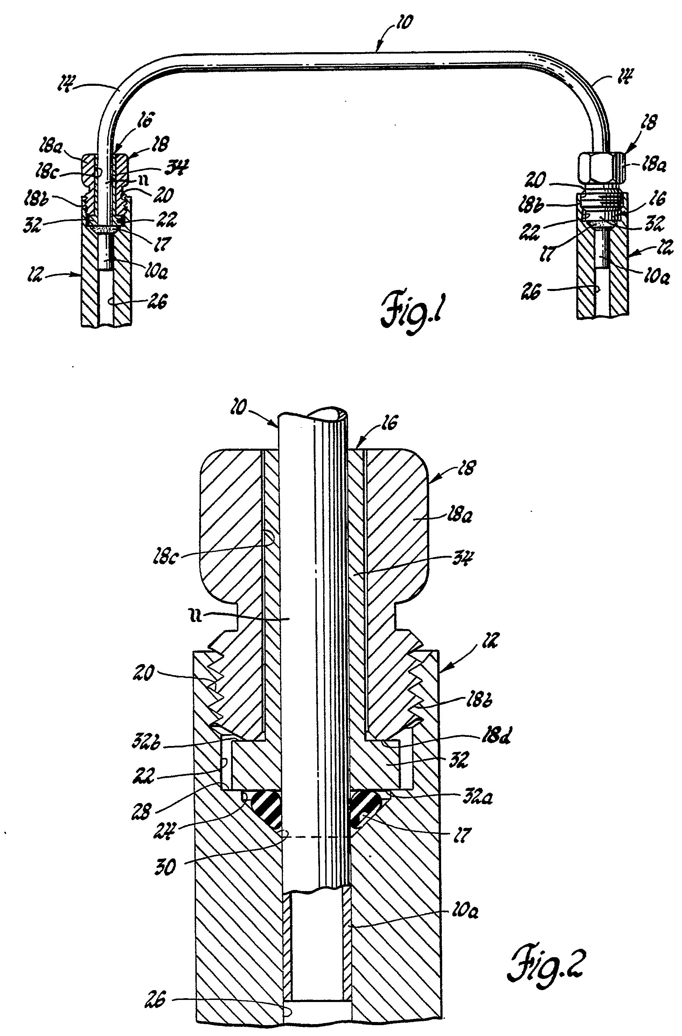

Figure 2 is an enlarged sectional view of one of the tube couplings of the fuel line tube coupling arrangement of Figure I.

Referring first to Figure I there is shown for purpose of illustration a fuel line tube coupling arrangement, having tube couplings in accordance with the invention. The fuel line tube coupling arrangement includes a fuel line tube I0, made for example of steel, which is secured at opposite ends to first and second coupling body elements I2 one of which, for example, may be formed as part of a fuel supply manifold for a multi cylinder diesel engine while the other may be formed as part of a conventional unit fuel injector. In this arrangement fuel can be supplied from the fuel supply manifold to the unit fuel injector or, alternatively, they may be formed as separate coupling fittings for attachment to such parts.

In the construction shown, the fuel line tube I0, adjacent to opposite ends thereof and outboard of the respective tube couplings is provided with bend portions I4, bent substantially at right angles. Intermediate these bend portions I4, the fuel line tube I0 is bent into an arcuate configuration, not shown, out of a vertical plane intersecting the axes of the tube couplings at opposite ends of the fuel line tube for a purpose well known in the art.

As best seen in the left hand of Figure I and, in particular, in Figure 2, each tube coupling includes a coupling end II of the fuel line tube I0 with a rigid ferrule I6 suitably and sealingly fixed thereto, as by brazing; a seal ring in the form of an O-ring seal I7; a tubular coupling nut I8; and the coupling body element I2.

As best seen in Figure 2, each coupling body element I2, in the construction illustrated, is provided with a stepped bore to define, in succession starting from the outboard end thereof, an internally threaded wall 20, an intermediate wall 22, a seal receiving wall 24 and a tube receiving wall 26, each of these walls being of reduced internal diameter relative to the maximum internal diameter of the internally threaded wall 20 and with the tube receiving wall 26 being of an internal diameter to loosely receive the coupling end II of the fuel line tube I0. Internally threaded wall 20 and intermediate wall 22 define a first wall. Intermediate wall 22 and seal receiving wall 24 are interconnected by a flat shoulder 28. Seal receiving wall 24 and tube receiving wall 26 are interconnected by a gland shoulder 30 which is suitably inclined with seal receiving wall 24 being of a suitable internal diameter greater than or equal to the nominal external diameter of the O-ring seal 17 so as to loosely receive this O-ring seal. Tube receiving wall 26 define a fluid passage.

Now in accordance with a feature of the invention, each coupling end 11 of the fuel line tube 10 has the rigid ferrule 16, made for example of steel, suitably fixed thereto so as to provide a sealed joint therebetween. The rigid ferrule 16 includes a radial flange portion 32 which is outwardly extending and which, in effect, defines an annular bead encircling the fuel line tube 10, the annular bead being axially located thereon a predetermined axial extent from the associate free or pilot end portion 10a of the coupling end 11 of the fuel line tube 10. The rigid ferrule 16 also includes a shank portion 34 of suitable thickness but of reduced external diameter relative to the external diameter of the radial flange portion 32. This radial flange portion 32 is sized so as to be loosely received by the intermediate wall 22 but has an external diameter greater than the internal diameter of the seal receiving wall 24. The radial flange portion 32 of the rigid ferrule 16 thus provides opposed inboard and outboard abutment surfaces 32a and 32b, respectively; the inboard abutment surface 32a being adapted to sealingly engage the flat shoulder 28 of the coupling body element 12 while the outboard abutment surface 32b can be engaged by an inboard end surface 18d of the tubular coupling nut 18.

Tubular coupling nut 18 is also provided with a wrench engaging head 18a, in the form of a hexagonal head in the construction illustrated; an externally threaded shank 18b for threaded engagement with the internally threaded wall 20 of the associate coupling body element 12; and a through-bore 18c therethrough of a suitable internal diameter so as to loosely receive the shank portion 34 of the rigid ferrule 16. Preferably, the axial extent of the shank portion 34 of the rigid ferrule 16 is at least substantially equal to the axial extent of the tubular coupling nut 18, as shown for the particular application illustrated, although it will be appreciated that, if desired, the axial extent of the shank portion 34 can be sized so as to extend axially outward of the attached tubular coupling nut 18.

In addition, the inboard end surface 18d of the tubular coupling nut 18 is suitably formed to provide a surface of reduced external diameter, as shown, so that the restraining torque of the surface contact of this inboard end surface 18d against the outboard abutment surface 32b is less than the restraining torque, in effect, seen by the surface contact between the inboard abutment surface 32a and the flat shoulder 28. This arrangement substantially prevents the rigid ferrule 16 from turning when the tubular coupling nut 18 is torqued down to effect sealing engagement between the inboard abutment surface 32a and the flat shoulder 28, and to effect compression of the O-ring seal 17.

As should now be apparent, the O-ring seal 17 is initially positioned so as to encircle the pilot end portion 10a of the fuel line tube 10 in a position where it will abut against the inboard abutment surface 32a of the radial flange portion 32 of the rigid ferrule 16. As thus positioned, when the coupling end 11 is inserted into the associate coupling body element 12, the O-ring seal 17 can loosely pass through the opening defined by the seal receiving wall 24 and then into compressed sealing engagement with the gland shoulder 30, as when the tubular coupling nut 18 is torqued down so as to compress the O-ring seal 17 to the positions shown in the drawings. This arrangement of the nominal external diameter of the O-ring seal 17 being less than or equal to the internal diameter of the seal receiving wall 24 differs from the arrangement shown in the previously mentioned prior art. In the above mentioned prior art, the O-ring seals are diametrically compressed on installation to establish an initial seal. This known arrangement has the disadvantage that the O-ring seal is prone to nicking, cutting or pinching during assembly, thereby leaking and (in the case of the rigid mount type of beaded tube coupling) substantially eliminiating the sealing capability of the lower metal to metal seal if the O-ring seal or pieces thereof were pinched between the metal surfaces. The known beaded tube couplings of the rigid mount type are prone to this type of failure. In the present invention, the risk of damaging the O-ring seal 17 on installation is substantially eliminated, the sealing action being provided by axial and radial crushing of the O-ring seal from the tightening of the tubular coupling nut 18 after the O-ring seal is installed.

By the use of the rigid ferrules 16 fixed to opposite coupling ends 11 of the fuel line tube 10, each above its respective connecting point, that is, the sandwiching point of the radial flange portion 34 between the flat shoulder 28 and the tubular coupling nut 18, the points on the fuel line tube 10 where maximum bending stress occurs is, in effect, moved to the top of each rigid ferrule 16 which, in the construction illustrated, corresponds to the outboard end of the respective tubular coupling nut 18.

Thus in a given engine application, this shortens the effective length of the fuel line tube 10 cantilevered beyond these new effective attaching points. By shortening this effective length of the fuel line tube 10, the stiffness of this portion of the fuel line tube 10 is increased. Shortening the unsupported length of a fuel line tube 10, as disclosed, for a particular application, increases the stiffness or spring rate of the fuel line tube 10 by the inverse of the cube of this length. The natural vibration frequency of the fuel line tube 10 is thus also increased as the relative unsupported length decreases thereby improving its resistance to possible vibration induced fatigue failure over an extended period of time. In addition, by making the rigid ferrule 16 of a suitable extended axial length, as shown, allows the rigid ferrule to be mechanically crimped to the fuel line tube 10 for location and retention during brazing.

While the invention has been described with reference to a particular embodiment disclosed herein, it is not confined to the details set forth since it is apparent that various modifications can be made by those skilled in the art without departing from the scope of the invention. For example, while the tubular coupling nut has been shown as a male nut it will be apparent that the coupling body element could be modified for use with a female type coupling nut in a manner known in the art. As an additional example, in order to prevent rotation of the rigid ferrule relative to the coupling body element when the tubular coupling nut is tightened, the inboard end surface 18d of the tubular coupling nut 18 and the flat shoulder 28 in the construction illustrated could each be inclined at a suitable angle so that initial contact between the tubular coupling nut and radial flange portion of the rigid ferrule is at the shortest radius possible and/or the initial contact between the inboard abutment surface 32a of the radial flange portion 32 of the rigid ferrule 16 and the coupling body element 12 is at the maximum radius possible.

The tube coupling of the present invention therefore provides an arrangement with substantially full sealing of all potential leak paths; which can be assembled without the risk of damage to the O-ring seal; which can be tightened without twisting the tube or damaging the tube or the tube coupling by over tightening; which is resistant to vibration failure; and which is therefore durable.

## Claims

1. A tube coupling for a tube (10) of uniform external diameter and thickness, comprising a coupling body element (12) having a stepped bore therein defining at least a first wall (20, 22), a seal receiving wall (24) and a tube receiving wall (26) defining a fluid passage, each or the walls being of progressively reduced internal diameter in the order named, the seal receiving wall and the tube receiving wall being interconnected by a gland shoulder (30) which is inclined, the first wall (20, 22) and the seal receiving wall (24) being interconnected by a flat shoulder (28), and a free end portion (l0a) of the tube (10) being slidably received in the tube receiving wall; a rigid ferrule (16) encircling the tube adjacent to the free end portion, the rigid ferrule including a radial flange portion (32) which is outwardly extending and of an external diameter so as to be loosely received in the first wall and defining opposed inboard and outboard abutment surfaces (32a, 32b) respectively, and a shank portion (34) extending from the outboard abutment surface; a seal ring (17) encircling the free end of the tube in abutment against the inboard abutment surface and sealingly engaging the gland shoulder; and a tubular coupling nut (18), with a through-bore (18c) therethrough so as to slidably encircle the shank portion of the rigid ferrule and so as to be threadingly engaged with the coupling body element for abutment against the outboard abutment surface such that the inboard abutment surface (32a) of the rigid ferrule is forced into the abutment with, to sealingly engage, the flat shoulder (28); characterised in that the rigid ferrule (16) is sealingly fixed to the tube (10); in that the shank portion (34) extends from the outboard surface a predetermined axial extent; in that the inboard abutment surface (32a) is located axially a predetermined distance from the free end portion (l0a) or the tube; in that the through-bore (18c) of the tubular coupling nut (18) has an axial extent corresponding substantially to the axial extent or the shank portion (34) of the rigid ferrule (16); and in that the turning moment of the tubular coupling nut (18) against the outboard abutment surface (32b) is less than the reaction moment between the inboard abutment surface (32a) and the flat shoulder (28).

2. A tube coupling according to Claim 1, characterised in that the nominal external diameter of the seal ring (17) is less than or equal to the internal diameter of the seal receiving wall (24).

## Patentansprüche

1. Rohrkupplung für ein Rohr (10) mit gleichmäßigem Außendurchmesser und gleichmäßiger Dicke, bestehend aus einem Kupplungskörperelement (12), das eine gestufte Bohrung in sich aufweist, die wenigstens eine erste Wandung (20, 22), eine Dichtungsaufnahmewandung (24) und eine einen Fluiddurchlaß definierende Rohraufnahmewandung (26) definiert, wobei jede der Wandungen in der benannten Reihenfolge einen fortschreitend reduzierten Innendurchmesser besitzt, die Dichtungsaufnahmewandung und die Rohraufnahmewandung durch eine geneigte Stopfenbüchsenschulter (30) miteinander verbunden sind, die erste Wandung (20, 22) und die Dichtungsaufnahmewandung (24) durch eine Flachschulter (28) miteinander verbunden sind und ein freies Endteil (10a) des Rohres (10) gleitbar in der Rohraufnahmewandung aufgenommen ist, einer starren Zwinge (16) die das Rohr nahe dem freien Endteil umschließt, wobei die starre Zwinge gebildet wird von einem radialen Flanschteil (32), das sich nach außen erstreckt und einen solchen Außendurchmesser besitzt, so daß es lose in der ersten Wandung aufgenommen wird und entgegengesetzte innenliegende und außenliegende Stützoberflächen (32a, 32b) jeweils definiert, und einem Schenkelteil (34), das sich ausgehend von der außenliegenden Stützoberfläche erstreckt, einem Dichtungsring (17) der das freie Ende des Rohres abgestützt gegen die innenliegende Stützoberfläche umschließt und abdichtend mit der Stopfbüchsenschulter verbunden ist, und einer rohrförmigen Kupplungsnuß (18) mit einer durchgehenden Bohrung (18c), um gleitbar das Schenkelteil der starren Zwinge zu umschließen, und um so zum Stützen gegen die außenliegende Stützoberfläche gewindeartig mit dem Kupplungskörperelement verbunden zu sein, daß die innenliegende Stützoberfläche (32a) der starren Zwinge zum Abstützen auf die Flachschulter (28) gezwungen ist, um diese abdichtend zu verbinden, dadurch gekennzeichnet, daß die starre Zwinge (16) abdichtend an dem Rohr (10) befestigt ist, daß sich das Schenkelteil (34) ausgehend von der außenliegenden Oberfläche über eine vorbestimmte axiale Ausdehnung erstreckt, daß die innenliegende Stützoberfläche (32a) axial in einem vorbestimmten Ab-

stand vom freien Endteil (l0a) des Rohres angeordnet ist, daß die durchgehende Bohrung (18c) der rohrförmigen Kupplungsnuß (18) eine axiale Ausdehnung im wesentlichen entsprechend der axialen Ausdehnung des Schenkelteils (34) der starren Zwinge (16) besitzt, und daß das Drehmoment der rohrförmigen Kupplungsnuß (18) gegen die außenliegende Stützoberfläche (32b) kleiner ist als das Reaktionsmoment zwischen der innenliegenden Stützoberfläche (32a) und der Flachschulter (28).

2. Rohrkupplung nach Anspruch 1, dadurch gekennzeichnet, daß der nominale Außendurchmesser des Dichtungsringes (17) kleiner oder gleich dem Innendurchmesser der Dichtungsaufnahmewandung (24) ist.

**Revendications**

1. Raccord de tuyau pour un tuyau (10) d'épaisseur et de diamètre eterne uniformes, comportant un élément formant corps d'accouplement (12) ayant un alésage intérieur étagé définissant au moins une première paroi (20, 22), une paroi réceptrice de joint (24) et une paroi réceptrice de tuyau (26) définissant un passage de fluide, chacune des parois étant d'un diamètre intérieur réduit progressivement dans l'ordre cité, la paroi réceptrice de joint et la paroi réceptrice de tuyau étant reliées par un épaulement de serrage (30) qui est incliné, la première paroi (20, 22) et la paroi réceptrice de joint (24) étant reliées par un épaulement plat (28), et une partie formant extrémité libre (10a) du tuyau (10) étant reçue de manière coulissante dans la paroi réceptrice de tuyau; un manchon rigide (16) entourant le tuyau à proximité de la partie formant extrémité libre, le manchon rigide comportant une partie formant collerette radiale (32) qui s'étend vers l'extérieur et possède un diamètre extérieur tel qu'elle est reçue de manière libre dans la première paroi, et définissant des surfaces de butée opposées intérieure et extérieure (32a, 32b) respectivement, et une partie formant tige (34) s'étendant depuis la surface de butée extérieure; un anneau d'étanchéité (17) entourant l'extrémité libre du tuyau, situé en butée contre la surface de butée intérieure et en contact de manière étanche avec l'épaulement de serrage; et un écrou d'accouplement tubulaire (18), possédant un alésage traversant (18c) de manière à entourer de manière coulissante la partie formant tige du manchon rigide et de façon à être vissé dans l'élément formant corps d'accouplement pour venir en butée contre la surface de butée extérieure de façon telle que la surface de butée intérieur (32a) du manchon rigide est serrée en butée contre l'épaulement plat (28) pour être en contact de manière étanche avec celui-ci; caractérisé en ce que le manchon rigide (16) est fixé de manière étanche au tuyau (10); en ce que la partie formant tige (34) s'étend à partir de la surface extérieure sur und distance axiale prédéterminée; en ce que la surface de butée intérieure (32a) est située axialement à une distance prédéterminée de la partie formant extrémité libre (10a) du tuyau; en ce que l'alésage traversant (18c) de l'écrou d'accouplement tubulaire (18) possède une longueur axiale correspondant à peu près à la distance axiale de la partie formant tige (34) du manchon rigide (16); et en ce que le moment du couple de l'écrou d'accouplement tubulaire (18) contre la surface de butée extérieure (32b) est plus petit que le moment de réaction entre la surface de butée intérieure (32a) et l'épaulement plat (28).

2. Raccord de tuyau selon la revendication 1, caractérisé en ce que le diamètre externe nominal de l'anneau d'étanchéité (17) est plus petit ou égal au diamètre interne de la paroi réceptrice de joint (24).

Fig.1

Fig.2